# EUROPÄISCHE PATENTSCHRIFT

(11) **EP 2 904 064 B1**
(45) Veröffentlichungstag und Bekanntmachung des Hinweises auf die Patenterteilung: **13.12.2017**
(21) Anmeldenummer: 13771387.1
(22) Anmeldetag: 25.09.2013
(51) Int. Cl.: C09K 5/12

(54) **VERFAHREN ZUR SPEICHERUNG VON ENERGIE IN SALZSCHMELZEN**
METHOD FOR STORING ENERGY IN SALT MELTS
PROCÉDÉ DE STOCKAGE D'ÉNERGIE DANS DES SELS FONDUS

(30) Priorität: 02.10.2012 DE 102012019381
(43) Veröffentlichungstag der Anmeldung: 12.08.2015
(73) Patentinhaber: Siemens Aktiengesellschaft, 80333 München (DE)
(72) Erfinder: GRÖPPEL, Peter, 91052 Erlangen (DE); MÜLLER-ELVERS, Christian, 91052 Erlangen (DE); ÜBLER, Matthias, 92289 Ursensollen (DE); MAASS, Hans-Jürgen, 01328 Dresden (DE)
(86) Internationale Anmeldenummer: PCT/EP2013/002875
(87) Internationale Veröffentlichungsnummer: WO 2014/053224

(56) Entgegenhaltungen:
- EP-A1- 1 990 595
- DE-A1-102009 052 304
- DE-A1-102010 041 460

## Beschreibung

Die Erfindung betrifft ein Verfahren zur Speicherung thermischer Energie, wobei in einem Einspeicherschritt aus einem Salzhydrat unter Wärmezufuhr Wasser abgespalten und so ein wasserfreies Anhydrat gebildet wird, an das in einem nachfolgenden Ausspeicherschritt unter Wärmeabgabe Wasser angelagert wird und das aus dem Salzhydrat abgespaltenes und in Dampfform vorliegendes Wasser gegen im Einspeicherschritt anzuwärmendes Salzhydrat kondensiert wird.

Als Salzhydrate werden Salze bezeichnet, die eine stöchiometrisch definierte Menge an Kristallwasser enthalten, das unter Wärmezufuhr stufenweise abgespalten werden kann. Falls sich das Salzhydrat nicht vorher zersetzt, steht am Ende dieses als Dehydratation bezeichneten Prozesses ein wasserfreies Salz, das Anhydrat des Salzhydrats. Bei dem umgekehrten, als Hydratation bezeichneten Vorgang lagert sich Kristallwasser unter Freisetzung von Wärme (Hydratationswärme) an das Anhydrat an, so dass wieder das Salzhydrat entsteht.

Verfahren, bei denen Salzhydrate zur Speicherung thermischer Energie eingesetzt werden, sind aus dem Stand der Technik bekannt. Beispielsweise wird in der Patentanmeldung DE102010041460 ein Verfahren zum Betreiben eines solarthermischen Kraftwerks offenbart, bei dem ein Wärmeträger verwendet wird, der Sonnenenergie aufnimmt und dabei kontinuierlich dampfförmiges Wasser abgibt, das durch Kondensation von dem flüssigen Wärmeträger abgetrennt und gespeichert wird. In Zeiten geringer Sonneneinstrahlung wird das gespeicherte Wasser dem Wärmeträger wieder zudosiert. Die dabei freigesetzte Wärme sorgt dafür, dass der Wärmeträger stets in flüssiger Form vorliegt. Bei dem Wärmeträger handelt es sich um eine Mischung aus zwei oder mehr Komponenten, von denen wenigstens eine ein ohne Zersetzung dehydratisierbares Salzhydrat ist. Ein ähnliches Verfahren zur Speicherung von Wärme ist in EP1990595 offenbart.

Entscheidend für die Wirtschaftlichkeit derartiger Wärmespeicherverfahren ist es, die unvermeidlichen Speicherverluste zu minimieren.

Der vorliegenden Erfindung liegt die Aufgabe zugrunde, ein Verfahren der eingangs beschriebenen Art anzugeben, dessen Wirtschaftlichkeit durch die Verringerung der Speicherverluste im Vergleich zum Stand der Technik erhöht ist.

Diese Aufgabe wird dadurch gelöst, dass das Salzhydrat und dessen Anhydrat als Bestandteile eines Wärmeträgers eingesetzt werden, der neben dem Anhydrat des Salzhydrats wenigstens ein weiteres Salz umfasst und dass der Wärmeträger sowohl während des Ein- als auch während des Ausspeicherschritts in flüssiger Form vorliegt. Bei der Energiespeicherung mit Hilfe von Salzhydraten treten große Speicherverluste dann auf, wenn die im erzeugten Wasserdampf enthaltene Energie nicht prozessintegriert genutzt werden kann. Durch die erfindungsgemäße Übertragung eines Großteils der latent und sensibel im Wasserdampf enthaltenen Wärme auf das Salzhydrat kann eine derartige Integration erreicht werden, wodurch die Effektivität der Energiespeicherung erheblich gesteigert wird. Zweckmäßigerweise erfolgt die Kondensation des Wasserdampfes bei erhöhtem Druck, so dass die Kondensationswärme bei einer Temperatur von deutlich über 100°C anfällt.

Insbesondere dann, wenn das erfindungsgemäße Verfahren an Orten mit problematischer Wasserversorgung eingesetzt wird, wie beispielsweise in solarthermischen Kraftwerken, die sich vorwiegend in niederschlagsarmen Gebieten befinden, kann es zweckmäßig sein, den kondensierten Wasserdampf in einen Wasserspeicher einzuleiten, aus dem Wasser wieder entnommen wird, um in einem Ausspeicherschritt verwendet und dem Anhydrat beigemischt zu werden. Da das Kondensat nach seiner Abkühlung gegen das Salzhydrat nur noch einen vergleichsweise geringen nutzbaren Wärmeinhalt aufweist, kann es vorteilhaft sein, den Wasserspeicher kostengünstig ohne Wärmeisolierung auszuführen.

Vorzugsweise wird das erfindungsgemäße Verfahren mit einem Salzhydrat durchgeführt, dessen Anhydrat eine Zersetzungstemperatur aufweist, die wesentlich höher ist, als die Temperatur, bei der die Dehydratation abgeschlossen ist. Um die Wärmespeicherfähigkeit des Salzhydrats möglichst effektiv zu nutzen wird daher vorgeschlagen, dem wasserfreien Anhydrat weiter Wärme zuzuführen und seinen fühlbaren Wärmeinhalt zu erhöhen. Hierbei wird die Temperatur des Anhydrats lediglich bis zu Werten angehoben, bei denen eine Zersetzung des Anhydrats mit Sicherheit ausgeschlossen ist. In diesem Fall ermöglicht es das erfindungsgemäße Verfahren, sensible und latente Wärme auf zwei unterschiedlichen Temperaturniveaus bereitzustellen.

Das erfindungsgemäße Verfahren kann bei einer Vielzahl von technischen Prozessen eingesetzt werden, in denen Wärme gespeichert bzw. übertragen werden soll. Falls die Dehydratation bei Temperaturen zwischen 50 und 200°C erfolgt, das entstehende Anhydrat allerdings weit höher aufgeheizt werden kann, eignet sich das Verfahren zur Bereitstellung von Fernwärme sowie für die Erzeugung von Wasserdampf. Mit besonderem Vorteil kann das erfindungsgemäße Verfahren in einem Dampfkraftwerk eingesetzt werden, das im Normalbetrieb neben elektrischer Energie auch Abwärme produziert, die zu Heizzwecken in ein Fernwärmenetz eingeleitet wird. Ist es erforderlich, ein derartiges Kraftwerk beispielsweise wegen Stromüberschusses vorübergehend vom Netz zu nehmen, fällt keine als Fernwärme nutzbare Abwärme an. Zur Sicherung der Fernwärmeversorgung kann gespeichertes Anhydrat durch Zugabe von Wasser zu Salzhydrat umgesetzt werden, wobei die bei typischen Fernwärmetemperaturen entstehende Hydratationswärme in das Fernwärmenetz eingespeist wird. Die fühlbar im Anhydrat gespeicherte Wärme kann zur Erzeugung von Hilfsdampf genutzt werden, der zum Wiederanfahren der Dampfturbine des Dampfkraftwerks Verwendung findet.

Vorzugsweise wird das Salzhydrat als Bestandteil eines Wärmeträgers eingesetzt, der neben dem Anhydrat des Salzhydrats wenigstens ein weiteres Salz umfasst, wobei das Salzhydrat aus den Verbindungen K₂HPO_{4˙}xH₂O, KF_{˙}xH₂O, CaCl_{2˙}xH₂O, LiNO_{3˙}xH₂O, Na₂SO_{4˙}xH₂O, Na₂CO_{3˙}xH₂O, LiBr_{˙}xH₂O, CaBr_{2˙}xH₂O, Na₂HPO_{4˙}xH₂O, Ca(NO₃)_{2˙}xH₂O, Na₃PO₄xH₂O, Na₄P₂O_{7˙}xH₂O, LiCl_{˙}xH₂O ausgewählt ist und x einen Wert zwischen 1 und 12 besitzen kann. Besonders bevorzugt umfasst der Wärmeträger Kaliumnitrat (KNO₃), Natriumnitrat (NaNO₃) und Kalziumnitrathydrat (Ca(NO₃)_{2˙}xH₂O), wobei der Faktor x einen Wert zwischen 1 und 4 besitzt und die Konzentrationen der Kationen Ca²⁺ 25-35mol-%, Na⁺ 15-25mol-% und K⁺ 45-55mol-% betragen.

Da der elektrische Wirkungsgrad eines Dampfkraftwerks stark von der Temperatur bestimmt wird, mit der das dampfförmige Arbeitsmedium in die Dampfturbine eintritt, sollte der Wärmeträger erfindungsgemäß die gespeicherte Wärme auf einem Temperaturniveau von über 400°C auf das Arbeitsmedium übertragen können, so dass beispielsweise die Erzeugung von überhitztem Wasserdampf möglich ist. Andererseits ist es günstig, wenn die freigesetzte Hydratationswärme auf einem Temperaturniveau zwischen 60 und 150°C anfällt, da sie dann in ein Fernwärmenetz eingespeist werden kann. Das erfindungsgemäße Verfahren weiterbildend wird daher vorgeschlagen, dass das Salzhydrat und dessen Anhydrat als Bestandteile eines Wärmeträgers eingesetzt werden, aus dem das enthaltene Wasser bei Umgebungsdruck im Temperaturbereich zwischen 50 und 200°C vollständig abgetrennt werden kann und dessen wasserfreier Anteil bis auf eine Temperatur von mehr als 400°C erhitzbar ist, ohne sich zu zersetzten.

Um die Erstarrungstemperatur des Wärmeträgers bis zu einer Temperatur von 100°C oder weniger nach unten zu verschieben, kann der Wärmeträger neben an das Salzhydrat gebundenem Kristallwasser, dessen Menge durch die Stöchiometrie festgelegt ist, auch freies Wasser aufweisen. Auch dieses Wasser, das ebenfalls im Einspeicherschritt verdampft und gegen anzuwärmenden Wärmeträger kondensiert wird, trägt zur Speicherkapazität des Wärmeträgers bei. Vorteilhafterweise liegt das Verhältnis von Kristallwasser zu freiem Wasser zu Beginn des Einspeicherschritts zwischen 0 und 1.

Besonders dann, wenn der Wärmeträger durch Rohrleitungen gepumpt oder in großen Tanks gespeichert werden soll, kann ein Erstarren des Wärmeträgers katastrophale Folgen haben. Zweckmäßigerweise wird die erfindungsgemäße Wärmespeicherung daher so durchgeführt, dass der Wärmeträger sowohl während des Ein- als auch während des Ausspeicherschritts - abgesehen von dem in die Gasphase überführten Wasseranteil - stets als niedrig viskose Flüssigkeit vorliegt. Dabei werden dynamische Viskositäten von weniger als 100mPas angestrebt.

Eine bevorzugte Variante des erfindungsgemäßen Verfahrens sieht vor, dass das über die Dehydratationstemperatur angewärmte Anhydrat des Salzhydrats unter Erzeugung von Hochdruckdampf gegen Wasser und/oder Wasserdampf abgekühlt wird. Insbesondere die auf einem niedrigeren Temperaturniveau anfallende Hydratationswärme wird dagegen zweckmäßigerweise in ein Fernwärmenetz eingespeist und zur Beheizung von Wohn- und/oder Arbeitsräumen genutzt.

Je nach dem Wassergehalt können bis zu 50% der auf den Wärmeträger übertragenen Energie latent im Wasserdampf vorliegen. Durch die erfindungsgemäße Kondensierung des Wasserdampfes gegen den kalten Wärmeträger wird die Wärmeintegration im Vergleich zum Stand der Technik deutlich verbessert.

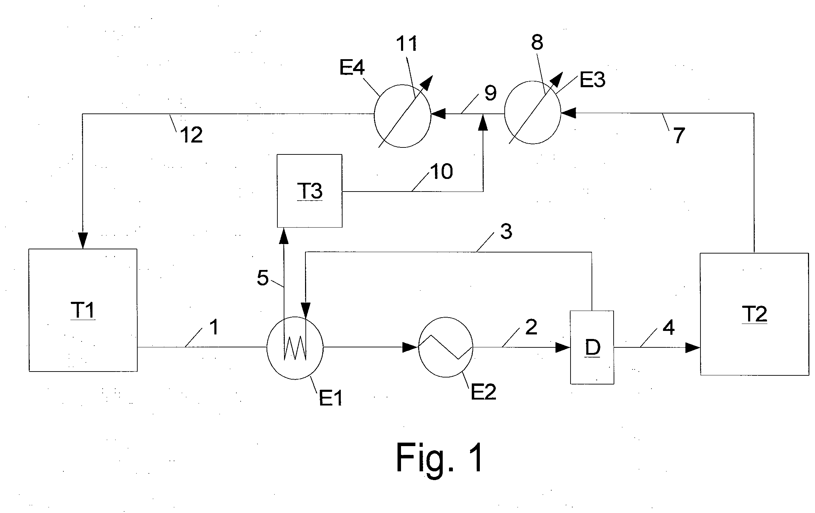

Im Folgenden soll die Erfindung anhand eines in der **Figur 1** schematisch dargestellten Ausführungsbeispiels näher erläutert werden.

Die **Figur 1** zeigt einen Wärmespeicher, in dem thermische Energie mit Hilfe eines salzhydrathaltigen Wärmeträgers gespeichert wird.

Während des Einspeicherschritts wird aus dem Speicherbehälter T1 ein aus Salzhydrat und Salzen bestehender Wärmeträger 1 mit einer Temperatur von ca. 100°C entnommen, dem über die beiden seriell angeordneten Wärmetauscher E1 und E2 zu speichernde Wärme zugeführt wird. Die Wärmezufuhr bewirkt die vollständige Dehydratisierung des Salzhydrats, so dass ein aus einer Salzschmelze, die das Anhydrat des Salzhydrats enthält, und Wasserdampf bestehendes Stoffgemisch 2 aus dem Wärmetauscher E2 in den Phasentrenner D eingeleitet wird, wo es in Wasserdampf 3 und eine wasserfreie Salzschmelze 4 getrennt wird. Während die wasserfreie Salzschmelze 4 mit einer Temperatur von mehr als 400°C in den Speicherbehälter T2 geführt wird, wird die Dampfphase 3 dem Wärmetauscher E1 zugeleitet und dort in indirektem Wärmetausch gegen den anzuwärmenden Wärmeträger 1 kondensiert. Das dabei erhaltene Kondensat 5 wird anschließend in den Speicherbehälter T3 geleitet, aus dem es im Ausspeicherschritt wieder entnommen werden kann.

Während des Ausspeicherschritts wird dem Wärmetauscher E3 aus dem Speicherbehälter T2 heiße Salzschmelze 7 zugeführt, der hier in indirektem Wärmetausch gegen ein Kühlmedium 8, bei dem es sich beispielsweise um das in einem Dampfkreislauf zirkulierende Arbeitsmedium einer Dampfturbine handeln kann, ein Großteil seiner sensiblen Wärme entzogen wird. Die abgekühlte Salzschmelze 9 wird nachfolgend mit Wasser 10 aus dem Speicherbehälter T3 vermischt und zur weiteren Abkühlung in den Wärmetauscher E4 eingeleitet. Mit sinkender Temperatur setzt die Hydratisierung des Anhydrats ein, so dass auch die dabei frei werdende latente Wärme dazu verwendet werden kann, um einen Wärmeträger 11 aufzuheizen, über den beispielsweise ein Fernwärmenetz mit Heizwärme versorgt wird. Über Leitung 12 wird der abgekühlte, aus Salz und Salzhydrat bestehende Wärmeträger schließlich flüssig in den Speicherbehälter T1 zurückgeführt.

## Patentansprüche

1. Verfahren zur Speicherung thermischer Energie, wobei in einem Einspeicherschritt aus einem Salzhydrat unter Wärmezufuhr Wasser abgespalten und so ein wasserfreies Anhydrat gebildet wird, an das in einem Ausspeicherschritt unter Wärmeabgabe Wasser angelagert wird, und dass aus dem Salzhydrat abgespaltenes und in Dampfform vorliegendes Wasser gegen im Einspeicherschritt anzuwärmendes Salzhydrat kondensiert wird **dadurch gekennzeichnet, dass** das Salzhydrat und dessen Anhydrat als Bestandteile eines Wärmeträgers eingesetzt werden, der neben dem Anhydrat des Salzhydrats wenigstens ein weiteres Salz umfasst, und dass der Wärmeträger sowohl während des Ein- als auch während des Ausspeicherschritts stets in flüssiger Form vorliegt.

2. Verfahren nach Anspruch 1, **dadurch gekennzeichnet, dass** das kondensierte Wasser gespeichert und in einem Ausspeicherschritt dem wasserfreien Anhydrat zugemischt wird.

3. Verfahren nach einem der Ansprüche 1 bis 2, **dadurch gekennzeichnet, dass** dem wasserfreien Anhydrat weiter Wärme zugeführt wird, um seinen fühlbaren Wärmeinhalt zu erhöhen, wobei die Temperatur des wasserfreien Anhydrates lediglich bis zu Werten angehoben wird, bei denen eine Zersetzung des Anhydrats ausgeschlossen ist.

4. Verfahren nach Anspruch 1, **dadurch gekennzeichnet, dass** der Wärmeträger Kaliumnitrat (KNO₃), Natriumnitrat (NaNO₃) und Kalziumnitrathydrat (Ca(NO₃)_{2˙}xH₂O) umfasst, wobei der Faktor x einen Wert zwischen 1 und 4 besitzt und die Konzentrationen der Kationen Ca²⁺ 25-35mol-%, Na⁺ 15-25mol-% und K⁺ 45-55mol-% betragen..

5. Verfahren nach einem der Ansprüche 1 bis 4, **dadurch gekennzeichnet, dass** zu Beginn des Einspeicherschritts im Wärmeträger das Verhältnis von Kristallwasser zu freiem Wasser zwischen 0 und 1 liegt.

6. Verfahren nach einem der Ansprüche 1 bis 5, **dadurch gekennzeichnet, dass** das Anhydrat des Salzhydrats unter Erzeugung von Hochdruckdampf gegen Wasser und/oder Wasserdampf abgekühlt wird.

7. Verfahren nach einem der Ansprüche 1 bis 6, **dadurch gekennzeichnet, dass** die bei der Anlagerung von Wasser an das Anhydrat freigesetzte Hydratationswärme in ein Fernwärmenetz eingespeist wird.

## Claims

1. Method of storing thermal energy, where, in a storage step, water is eliminated from a salt hydrate with introduction of heat so as to form a water-free anhydrate to which, in a discharge step, water is bound with release of heat and water which has been eliminated from the salt hydrate and is present in vapour form is condensed against salt hydrate to be heated in the storage step, **characterized in that** the salt hydrate and the anhydrate thereof are used as constituents of a heat transfer medium which comprises at least one further salt in addition to the anhydrate of the salt hydrate and **in that** the heat transfer medium is always present in liquid form both during the storage step and during the discharge step.

2. Method according to Claim 1, **characterized in that** the condensed water is stored and added to the water-free anhydrate in a discharge step.

3. Method according to either of Claims 1 and 2, **characterized in that** further heat is introduced into the water-free anhydrate in order to increase its sensible heat content, with the temperature of the water-free anhydrate being increased only to values at which decomposition of the anhydrate is ruled out.

4. Method according to Claim 1, **characterized in that** the heat transfer medium comprises potassium nitrate (KNO₃), sodium nitrate (NaNO₃) and calcium nitrate hydrate (Ca(NO₃)₂xH₂O), where the factor x is from 1 to 4 and the concentrations of the cations are: Ca²⁺ 25-35 mol%, Na⁺ 15-25 mol% and K⁺ 45-55 mol%.

5. Method according to any of Claims 1 to 4, **characterized in that** the ratio of water of crystallization to free water is in the range from 0 to 1 in the heat transfer medium at the beginning of the storage step.

6. Method according to any of Claims 1 to 5, **characterized in that** the anhydrate of the salt hydrate is cooled against water and/or steam with generation of high-pressure steam.

7. Method according to any of Claims 1 to 6, **characterized in that** the heat of hydration liberated during the binding of water to the anhydrate is fed into a district heating network.

## Revendications

1. Procédé pour le stockage d'énergie thermique, dans lequel, dans une étape d'emmagasinage, de l'eau est séparée d'un hydrate de sel avec apport de chaleur et un anhydrate exempt d'eau est ainsi formé, sur lequel, dans une étape de récupération, de l'eau est additionnée avec dissipation de chaleur, et l'eau séparée de l'hydrate de sel et se présentant sous forme de vapeur est condensée en hydrate de sel à réchauffer dans l'étape d'emmagasinage, **caractérisé en ce que** l'hydrate de sel et son anhydrate sont utilisés en tant que constituants d'un agent caloporteur, qui en plus de l'anhydrate de l'hydrate de sel comporte au moins un autre sel, et **en ce que** l'agent caloporteur se présente constamment sous forme liquide aussi bien pendant l'étape d'emmagasinage que pendant l'étape de récupération.

2. Procédé selon la revendication 1, **caractérisé en ce que** l'eau condensée est stockée et, dans une étape de récupération, mélangée à l'anhydrate exempt d'eau.

3. Procédé selon l'une des revendications 1 à 2, **caractérisé en ce que** de la chaleur supplémentaire est apportée à l'anhydrate exempt d'eau afin d'augmenter sa capacité calorifique sensible, dans lequel la température de l'anhydrate exempt d'eau est portée uniquement à des valeurs auxquelles une décomposition de l'anhydrate est exclue.

4. Procédé selon la revendication 1, **caractérisé en ce que** l'agent caloporteur comprend du nitrate de potassium (KNO₃), du nitrate de sodium (NaNO₃) et du nitrate de calcium hydraté (Ca(NO₃)₂xH₂O), dans lequel le facteur x prend une valeur comprise entre 1 et 4 et les concentrations des cations s'élèvent à des valeurs de 25 à 35 % en moles de Ca²⁺, de 15 à 25 % en moles de Na⁺ et de 45 à 55 % en moles de K⁺.

5. Procédé selon l'une des revendications 1 à 4, **caractérisé en ce qu'**au début de l'étape d'emmagasinage dans l'agent caloporteur, le rapport de l'eau de cristallisation à l'eau libre est compris entre 0 et 1.

6. Procédé selon l'une des revendications 1 à 5, **caractérisé en ce que** l'anhydrate de l'hydrate de sel est refroidi avec production de vapeur haute pression contre de l'eau et/ou de la vapeur d'eau.

7. Procédé selon l'une des revendications 1 à 6, **caractérisé en ce que** la chaleur d'hydratation libérée lors de l'addition d'eau sur l'anhydrate est emmagasinée dans un réseau de chauffage urbain.
